(19) Europäisches Patentamt
European Patent Office
Office européen des brevets

(11) EP 2 060 606 B1

(12) # EUROPEAN PATENT SPECIFICATION

(45) Date of publication and mention of the grant of the patent:
**07.05.2014 Bulletin 2014/19**

(21) Application number: **07806552.1**

(22) Date of filing: **27.08.2007**

(51) Int Cl.:
***C08L 69/00*** *(2006.01)* ***C08G 64/02*** *(2006.01)*
***C08G 64/34*** *(2006.01)* ***C08L 67/04*** *(2006.01)*

(86) International application number:
**PCT/JP2007/067079**

(87) International publication number:
**WO 2008/026744 (06.03.2008 Gazette 2008/10)**

(54) **POLYCARBONATE RESIN COMPOSITION COMPRISING PLANT-DERIVED COMPONENT**

POLYCARBONATHARZZUSAMMENSETZUNG MIT EINER AUS PFLANZEN GEWONNENEN KOMPONENTE

COMPOSITION DE RÉSINE POLYCARBONATE COMPRENANT UN COMPOSANT D'ORIGINE VÉGÉTALE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.08.2006 JP 2006230428**

(43) Date of publication of application:
**20.05.2009 Bulletin 2009/21**

(73) Proprietor: **Teijin Limited**
**Osaka-shi, Osaka 541-0054 (JP)**

(72) Inventors:
- **ODA, Akimichi**
  **Iwakuni-shi, Yamaguchi 740-0014 (JP)**
- **MIYOSHI, Takanori**
  **Iwakuni-shi, Yamaguchi 740-0014 (JP)**

(74) Representative: **Hallybone, Huw George et al**
**Carpmaels & Ransford LLP**
**One Southampton Row**
**London WC1B 5HA (GB)**

(56) References cited:
**EP-A1- 1 264 860**
**EP-A1- 1 640 400**
**WO-A1-2007/083820**
**JP-A- 2006 036 954**
**JP-A- 2007 070 391**
**JP-A- 2007 146 019**
**US-A1- 2005 143 554**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 060 606 B1

## Description

### Technical Field

The present invention relates to a plant component-containing resin composition with improved heat resistance. More specifically, it relates to a resin composition comprising a plant component-containing polycarbonate and a polylactic acid composed of a poly-L-lactic acid component and a poly-D-lactic acid component, which resin composition exhibits an improved deflection temperature under load.

### Background Art

Polycarbonate resins are now widely employed in electrical and electronic fields, automobile fields, optical part fields and other industrial fields because of their excellent transparency, heat resistance and impact resistance. However, since the commonly used aromatic polycarbonate resins are produced using starting materials obtained from petroleum resources, they are not preferred in light of modern concerns over depletion of petroleum resources and global warming due to carbon dioxide generated by thermal disposal of waste, and hence more environmentally friendly and easily recyclable materials are desired.

Research is being conducted on polycarbonates composed of plant-derived starting materials, as a means of overcoming such problems (for example, Patent document 1). The use of polycarbonates from plant-derived starting materials exclusively, however, has not resulted in sufficient heat resistance and especially deflection temperature under load for practical use in the fields mentioned above, and improvement in heat resistance has therefore been desired. Polylactic acid has been a subject of interest in recent years as an alternative plastic from plant-derived starting materials. Polylactic acid is biodegradable and therefore environmentally friendly, while it also has relatively high heat resistance and excellent mechanical strength and transparency among biodegradable plastics, for which reasons it has found a wide variety of uses.

Resin compositions composed of polylactic acid and polycarbonate are under investigation and have demonstrated effects of improved polycarbonate resin flow properties and improved impact resistance and heat resistance of polylactic acid (for example, Patent documents 2-5 and others). However, the polycarbonates used in such cases are all aromatic polycarbonates made of petroleum components, and despite the use of polylactic acid, it cannot be said that the goal of achieving reduced environmental load by plastics has been satisfactorily achieved.

[Patent document 1] International Patent Publication No. 2004/111106
[Patent document 2] Japanese Unexamined Patent Publication No. 2005-48067
[Patent document 3] Japanese Unexamined Patent Publication HEI No. 7-109413
[Patent document 4] Japanese Unexamined Patent Publication HEI No. 11-140292
[Patent document 5] Japanese Unexamined Patent Publication No. 2004-250549

EP1264860 A1 discloses a resin composition used for films and tapes with excellent softness, heat-resistance and biodegradability, comprising 60 parts by weight polyethylene carbonate and 40 parts by weight polylactic acid.

### Disclosure of the Invention

It is an object of the present invention to solve the aforementioned problems of the prior art by providing a resin composition comprising two components, namely a polycarbonate resin containing a plant-derived component as a polymerizing unit and a polylactic acid composed of a L-lactic acid component and D-lactic acid component, the polycarbonate resin of which has improved heat resistance, and this object of the invention is achieved by a resin composition comprising 100 parts by weight of a polycarbonate (component A) which contains an ether diol residue represented by the following formula (1):

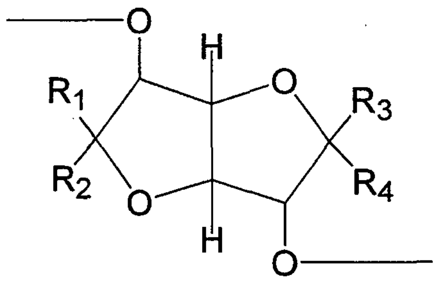
(1)

(wherein $R_1$-$R_4$ each independently represent hydrogen, alkyl, cycloalkyl or aryl),

the ether diol residue represented by formula (1) constituting 40-100 mol% of the total diol residues in the polycarbonate, and 1-40 parts by weight of polylactic acid (component B), wherein the polylactic acid (component B) is composed of a poly-L-lactic acid component (component B-1) and a poly-D-lactic acid component (component B-2), and wherein in the melting peak derived from the polylactic acid component during temperature increase for measurement with a differential scanning calorimeter (DSC), the proportion of the melting peak area for 195°C and above is at least 60% of the sum of the melting peak area for 195°C and above (high temperature) and the melting peak area for 140-180°C (low temperature), as determined by measurement of the melting peak derived from the polylactic acid component during temperature increase with a differential scanning calorimeter (DSC).

Best Mode for Carrying Out the Invention

Modes for carrying out the invention will now be explained in detail. The following examples and their explanation serve only as illustration of the invention and do not restrict the scope of the invention in any way. Other modes that fall within the gist of the invention are, of course, encompassed within the scope of the invention.

The resin composition of the invention is a resin composition comprising 100 parts by weight of a polycarbonate (component A) which contains an ether diol residue represented by the following formula (1):

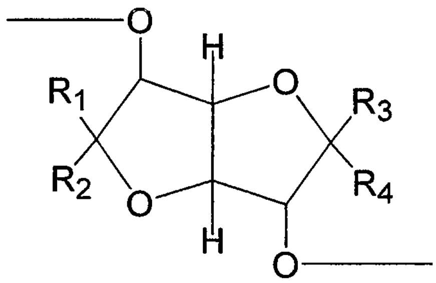
(1)

(wherein $R_1$-$R_4$ each independently represent hydrogen, alkyl, cycloalkyl or aryl),

the ether diol represented by formula (1) constituting 40-100 mol% of the total diol residues in the polycarbonate, and 1-40 parts by weight of polylactic acid (component B), wherein the polylactic acid (component B) is composed of a poly-L-lactic acid component (component B-1) and a poly-D-lactic acid component (component B-2), and wherein in the melting peak derived from the polylactic acid component during temperature increase for measurement with a differential scanning calorimeter (DSC), the proportion of the melting peak area for 195°C and above is at least 60% of the sum of the melting peak area for 195°C and above (high temperature) and the melting peak area for 140-180°C (low temperature), as determined by measurement of the melting peak derived from the polylactic acid component during temperature increase with a differential scanning calorimeter (DSC).

In formula (1) above, $R_1$-$R_4$ preferably each independently represent hydrogen, constitutive C1-12 alkyl, constitutive C1-12 cycloalkyl or constitutive C6-12 aryl, and most preferably all of $R_1$-$R_4$ represent hydrogen.

If the weight ratio of component B with respect to component A is below the range specified above, the melt viscosity of the resin composition will be increased and the moldability will be poor. If the weight ratio is larger than the range specified above, no effect of improved heat resistance will be achieved. The polylactic acid is preferably 5-30 parts by weight with respect to 100 parts by weight of the polycarbonate.

According to the invention, the ether diol residue represented by formula (1) is in the range of 40-100 mol% of the total diol residues in the polycarbonate. If the proportion of ether diol residue represented by formula (1) is below

this range, the glass transition temperature of the obtained resin will be low, resulting in poor heat resistance. The proportion of ether diol residue represented by formula (1) is preferably at least 60 mol% and no greater than 90 mol% of the total diol residues.

The polycarbonate preferably has a reduced viscosity of 0.40 dl/g or greater, more preferably 0.50 dl/g or greater, and even more preferably 0.60 dl/g or greater. A satisfactory melt flow property and adequate mechanical strength are exhibited within this range. From the standpoint of moldability, it is preferably no greater than 1.0 dl/g and even more preferably no greater than 0.80 dl/g.

The reduced viscosity can be easily controlled by the polymerization catalyst, polymerization reaction time, polymerization reaction temperature and starting material charging ratio.

The glass transition temperature of the polycarbonate used for the invention is preferably 90°C or higher and more preferably 100°C or higher. A glass transition temperature of below 90°C may make it impossible to achieve sufficiently practical heat resistance and moldability.

The Tg can also be easily controlled by the polymerization catalyst, polymerization reaction time, polymerization reaction temperature, starting material charging ratio, and proportion of ether diol residue represented by formula (1) among the total diol residues in the polycarbonate.

The diol residue in the polycarbonate preferably further includes a diol residue represented by the following formula (2):

$$\textbf{-O-R}_5\textbf{-O-} \qquad (2)$$

(at least one diol residue wherein $R_5$ is a group selected from among C2-12 aliphatic hydrocarbon and alicyclic groups). The diol residue is preferably 0-60 mol% and more preferably 10-40 mol% of the total diol residues.

The diol source of the diol residue in formula (2) above, i.e. the diol component represented by $HO-R_5-OH$, may be ethylene glycol, 1,3-propanediol, 1,4-butanediol, 1,5-pentanediol, 1,6-hexanediol, 1,4-cyclohexanediol, 1,4-cyclohexanedimethanol, and such diol components may also be used in combinations of at least two or more. Preferred among these are 1,3-propanediol, 1,4-butanediol and 1,6-hexanediol from the standpoint of a higher polymerization degree during synthesis of the polymer and, as well as a high glass transition point in terms of the physical properties of the polymer, while 1,3-propanediol is more preferred since processes for its production from plants exist. The diol component may also include diol components other than ether diols and aliphatic diols. As other diol components there may be mentioned alicyclic alkylenediols such as cyclohexanediol and cyclohexanedimethanol, aromatic diols such as dimethanolbenzene and diethanolbenzene, and bisphenols.

The aliphatic diol used for the invention is preferably purified by simple distillation, rectification or recrystallization.

The ether diol of the ether diol residue represented by formula (1) above may be, specifically, isosorbide, isomannide or isoidide represented by the following formula (3), (4) or (5):

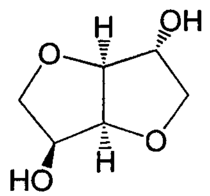
(3)

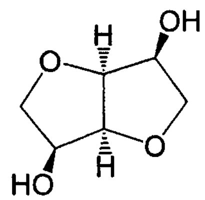
(4)

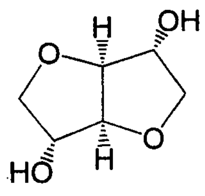
(5).

These saccharide-derived ether diols are substances obtained from natural biomass, and are renewable sources. Isosorbide can be obtained by adding hydrogen to D-glucose from starch and then subjecting it to dehydration. Other ether diols can also be obtained by similar reactions with different starting materials.

Particularly preferred is a polycarbonate containing an isosorbide residue as the ether diol residue represented by formula (1). Isosorbide is an ether diol that is easily produced from starch as an abundantly available source, while it is easier to produce than isomannide or isoidide and exhibits superior properties and versatility of use. Isosorbide residues preferably constitute 60-100 wt% of the ether diol residues represented by formula (1).

There are no particular restrictions on the molecular weight of the polylactic acid used for the invention, but it is preferably 50,000 or greater, more preferably 80,000 or greater and even more preferably 100,000 or greater. The upper limit is preferably 300,000. A satisfactory melt flow property and adequate mechanical strength are exhibited within this range.

There are also no particular restrictions on the glass transition temperature of the polylactic acid, but it is preferably 40°C or higher and more preferably 50°C or higher. Within this range, sufficient heat resistance will be exhibited for use at room temperature. The upper limit for the glass transition temperature is preferably 70°C.

The polylactic acid (component B) in the resin composition of the invention consists of component B-1 which is a polylactic acid composed mainly of an L-lactic acid unit, and component B-2 which is a polylactic acid composed mainly of a D-lactic acid unit.

Component B-1 is a polylactic acid composed mainly of an L-lactic acid unit, with D-lactic acid and/or a copolymerizing component unit other than lactic acid.

Component B-2 is a polylactic acid composed mainly of a D-lactic acid unit, with L-lactic acid and/or a copolymerizing component unit other than lactic acid.

The weight ratio of component B-1 and component B-2 in component B of the resin composition of the invention (component B-1/component B-2) is preferably 10/90-90/10, and for an increased effect of improved heat resistance it is more preferably 25/75-75/25 and even more preferably 40/60-60/40. If the weight ratio of one polymer is less than 10 or greater than 90, the heat resistance improving effect will not be satisfactorily exhibited.

The polylactic acid component in the polylactic acid (component B) may be copolymerized with a component other than lactic acid so long as the object of the invention is not prevented, and as copolymerizing component units other than lactic acid there may be used, either alone or in mixtures, units derived from dicarboxylic acids, polyhydric alcohols, hydroxycarboxylic acids and lactones with two or more ester bond-forming functional groups, as well as units derived from various polyesters, polyethers or polycarbonates composed thereof as constituent components.

As dicarboxylic acids there may be mentioned succinic acid, adipic acid, azelaic acid, sebacic acid, terephthalic acid and isophthalic acid. As polyhydric alcohols there may be mentioned aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol and polypropylene glycol, or aromatic polyhydric alcohols such as addition product of ethylene oxide to bisphenol. As hydroxycarboxylic acids there may be mentioned glycolic acid, hydroxybutylcarboxylic acid . As lactones there may be mentioned glycolide, ε-caprolactone glycolide, ε-caprolactone, β-propiolactone, δ-butyrolactone, β- or γ-butyrolactone, pivalolactone, δ-valerolactone.

The polylactic acid components (components B-1 and B-2) of the polylactic acid (component B) in the resin composition of the invention may be produced by any known polymerization process for polylactic acid, and for example, they may be produced by a process of ring-opening polymerization of lactides, dehydrating condensation of lactic acids or combinations thereof with solid-phase polymerization.

When the polylactic acid components (components B-1 and B-2) are produced by a desired known polymerization process, lactides that form as cyclic dimers of lactic acid may be produced as by-products. The polylactic acid components may also contain such lactides so long as they do not impair the thermostability of the resin.

The lactides in the polylactic acid components may be removed from the polylactic acid components after polymerization of each polylactic acid component is complete by a method of removal by melting under reduced pressure or a method of extraction removal using a solvent, and this is preferred in order to improve the thermostability of the resin. Lactides are preferably present in each polylactic acid component at no greater than 2 wt%, more preferably no greater than 1 wt% and even more preferably no greater than 0.5 wt% with respect to each polylactic acid component.

As copolymerizing component units other than lactic acid used in the polylactic acids (components B-1 and B-2) of the polylactic acid (component B) there may be mentioned dicarboxylic acids, polyhydric alcohols, hydroxycarboxylic acids and lactones with two or more ester bond-forming functional groups, as well as various polyesters, polyethers or polycarbonates composed thereof as constituent components.

The polylactic acid components (components B-1 and B-2) of the polylactic acid (component B) may also contain a polymerization catalyst so long as the thermostability of the resin is not impaired. As such catalysts there may be mentioned various tin compounds, aluminum compounds, titanium compounds, zirconium compounds, calcium compounds, organic acids and inorganic acids. Such catalysts may be fatty acid salts, carbonic acid salts, sulfuric acid salts, phosphoric acid salts, oxides, hydroxides, halides or alcoholates of tin, aluminum, zirconium or titanium, or they may be

the metals themselves. Specifically, there may be mentioned tin octylate, aluminum acetylacetonate, aluminum alkoxides, titanium alkoxides and zirconium alkoxides.

The polymerization catalyst in the polylactic acid components (components B-1 and B-2) may be removed or inactivated after completion of the polymerization reaction for each polylactic acid component, by a method of extraction removal using a solvent or a method of adding a known stabilizer to inactivate the catalyst, and this is preferred in order to improve the thermostability of the resin.

For differential scanning calorimeter (DSC) measurement of the resin composition obtained according to the invention, two different melting peaks are measured in regions of 140-180°C and ≥195°C during temperature increase. The polycarbonate component in the resin composition is amorphous and exhibits no melting peak, and therefore the two melting peaks are assigned to the polylactic acids. The proportion of melting peaks at ≥195°C among the peaks is preferably 60% or greater. If the proportion is less than 60%, the effect of improved heat resistance will not be adequately achieved. The proportion is more preferably 70% or greater and even more preferably 80% or greater.

The resin composition of the invention preferably has a deflection temperature under load of above 85°C with a load of 1.80 MPa, when the deflection temperature under load of the resin composition is measured according to ISO75-1 and ISO75-2 using a test strip with a thickness of 3 mm, a width of 12 mm and a length of 120 mm. A lower deflection temperature under load will undesirably result in insufficient heat resistance for various purposes.

The resin composition of the invention may be used alone, or it may be combined with another thermoplastic resin (for example, a polyalkylene terephthalate resin, polyallylate resin, liquid crystalline polyester resin, polyamide resin, polyimide resin, polyetherimide resin, polyurethane resin, silicone resin, polyphenylene ether resin, polyphenylene sulfide resin, polysulfone resin, or polyolefin resin such as polyethylene or polypropylene), a filler (glass fibers, carbon fibers, natural fibers, organic fibers, ceramic fibers, ceramic beads, talc, clay or mica), an antioxidant (a hindered phenol-based compound, sulfur-based antioxidant), a flame-retardant additive (phosphorus-based or bromo-based), an ultraviolet absorber (benzotriazole-based, benzophenone-based or cyanoacrylate-based), or a flow modifier, coloring agent, light diffusion agent, infrared absorber, organic pigment, inorganic pigment, release agent, plasticizer, in ranges that do not interfere with the object of the invention.

The resin composition of the invention may be used after working into any of various molded articles (injection molded article, extrusion molded article, blow molded article, film, fibers, sheet) by a method such as injection molding, extrusion molding or blow molding.

## EXAMPLES

The present invention will now be explained in more specific detail through the following examples, with the understanding that the invention is in no way limited thereby.

The polycarbonate component (component A) (hereinafter also abbreviated as "Bio-PC") and polylactic acid component (component B) were produced by the methods indicated in the production examples described below. The values in the examples were determined by the following methods.

(1) Reduced viscosity: The 35°C viscosity of a solution obtained by dissolving 120 mg of polycarbonate in 10 ml of a phenol/tetrachloroethane (volume ratio: 50/50) mixed solvent was measured using an Ubbelohde viscometer. The units were dl (deciliters)/g.

(2) Weight-average molecular weight: The weight-average molecular weight of the polylactic acid was determined by gel permeation chromatography (GPC) based on polystyrene.

(3) Glass transition temperature and proportion of ≥195°C melting peak assigned to polylactic acid ($R_{\geq 195}$): A DSC2920 by TA instruments was used for measurement under a nitrogen atmosphere with a temperature-elevating rate of 20°C/min. $R_{\geq 195}$ was calculated by the following formula based on the ≥195°C (high temperature) melting peak area and 140-180°C (low temperature) melting peak area from the results of DSC measurement of the injection molded article obtained in each of the examples described below.

$$R_{\geq 195}\ (\%) = A_{\geq 195}/(A_{\geq 195}+A_{140\text{-}180}) \times 100$$

$R_{\geq 195}$: Proportion of ≥195°C melting peak
$A_{\geq 195}$: ≥195°C melting peak area
$A_{140\text{-}180}$: 140-180°C melting peak area

(4) Deflection temperature under load: A test strip with a thickness of 3 mm, a width of 12 mm and a length of 120 mm obtained by injection molding was measured according to ISO75-1 and ISO75-2 under a 1.80 MPa load.

(5) Plant-derived component-containing weight ratio (wt%): The plant-derived component weight ratio was determined as the plant-derived component-containing weight ratio (wt%) in the resin composition according to the following formula based on each content, with the plant-derived component-containing weight ratio (wt%) for BioPC as 82% (calculated by the formula shown below), the plant-derived component-containing weight ratio (wt%) for scPLA as 100% and the plant-derived component-containing weight ratio (wt%) for ordinary polycarbonate composed of bisphenol A as zero.

Plant-derived component-containing weight ratio (wt%) in BioPC =

$$100\times\left(\frac{\text{Isosorbide unit molecular weight}\times A+\text{1,3-propanediol unit molecular weight}\times B}{\text{Isosorbide molecular weight}\times A+\text{1,3-propanediol molecular weight}\times B}\right)=\frac{144\times A+74\times B}{172\times A+102\times B}\times 100$$

In the formula, "isosorbide unit" means a unit of isosorbide without the carbonyl group, and "1,3-propanediol unit" means a unit of 1,3-propanediol without the carbonyl group.

Also, "A" means the molar ratio of isosorbide units in the resin (= 0.75), and "B" means the molar ratio of 1,3-propanediol units in the resin (= 0.25).

Plant-derived component-containing weight ratio (wt%) in resin composition =

$$82 \times C + 100 \times D + 0 \times E$$

In this formula, "C" means the weight ratio of BioPC in the resin composition, "D" means the weight ratio of scPLA in the resin composition and "E" means the weight ratio of ordinary polycarbonate composed of bisphenol A.

<u>Production Example 1: Production of polycarbonate component (Bio-PC) (component A)</u>

After placing isosorbide (20.0 kg, 137 mol), 1,3-propanediol (4.69 kg, 61.6 mol) and diphenyl carbonate (41.9 kg, 196 mol) in a polymerization tank, 2,2-bis(4-hydroxyphenyl)propane disodium salt (13.3 mg, 4.89 x $10^{-}$mol) and tetramethylammonium hydroxide (7130 mg, 1.96 x $10^{-2}$ mol) were added as polymerization catalysts and the mixture was melted under a nitrogen atmosphere at 180°C. The pressure was then reduced and the temperature increased while stirring, and the interior of the reaction tank was brought to 66.67 Pa (0.5 mmHg), 245°C while distilling off the produced phenol. The obtained polycarbonate is herein abbreviated as "Bio-PC".

The reduced viscosity of the Bio-PC was 0.59-0.63, and the glass transition point as measured by DSC was 121-122°C.

<u>Production Example 2: Production of poly-L-lactic acid component (component B-1)</u>

After adding 48.75 parts by weight of L-lactide (product of Musashino Chemical Laboratory, Co. Ltd.) and 1.25 parts by weight of D-lactide (product of Musashino Chemical Laboratory, Co. Ltd.) in a polymerization tank, the system interior was substituted with nitrogen, and then 0.05 part by weight of stearyl alcohol and 25 x $10^{-3}$ parts by weight of tin octylate as a catalyst were added and polymerization was conducted at 190°C, 2 hours to produce a polymer. The polymer was washed with a 7% 5N hydrochloric acid-containing acetone solution to remove the catalyst and obtain a poly-L-lactic acid component (PLLA, component B-1). The weight-average molecular weight of the obtained PLLA (component B-1) was 118,200. The melting point (Tm) was 159°C. The crystallization point (Tc) was 120°C.

<u>Production Example 3: Production of poly-D-lactic acid component (component B-2)</u>

After adding 1.25 parts by weight of L-lactide (product of Musashino Chemical Laboratory, Co. Ltd.) and 48.75 parts by weight of D-lactide (product of Musashino Chemical Laboratory, Co. Ltd.) in a polymerization tank, the system interior was substituted with nitrogen, and then 0.05 part by weight of stearyl alcohol and 25 x $10^{-3}$ parts by weight of tin octylate as a catalyst were added and polymerization was conducted at 190°C, 2 hours to produce a polymer. The polymer was washed with a 7% 5N hydrochloric acid-containing acetone solution to remove the catalyst and obtain a poly-D-lactic acid component (PDLA, component B-2). The weight-average molecular weight of the obtained PDLA (component B-2) was 130,700. The melting point (Tm) was 156°C. The crystallization point (Tc) was 120°C.

Example 1

A dry pelleted blend of 5.5 parts by weight of (component B-1) and 5.5 parts by weight of (component B-2) with respect to 100 parts by weight of (component A) was used for injection molding with an injection molding machine (PS20E2A injection molding machine by Nissei Plastic Industrial Co., Ltd.) at a cylinder temperature of 240°C, a mold temperature of 40°C, an injection time of 4 seconds and a cooling time of 30 seconds to produce a molded article with a thickness of 3 mm, a width of 12 mm and a length of 120 mm, and the deflection temperature under load was measured (weight ratio: Bio-PC/PLLA/PDLA = 90/5/5). The results are shown in Table 1.

Example 2

A molded article was produced by the same procedure as in Example 1 except for combining 12.5 parts by weight each of (component B-1) and (component B-2) with respect to 100 parts by weight of (component A), and the deflection temperature under load was measured (weight ratio: Bio-PC/PLLA/PDLA = 80/10/10). The results are shown in Table 1.

Comparative Example 1

A molded article was produced by the same procedure as in Example 1 except for combining 21.5 parts by weight each of (component B-1) and (component B-2) with respect to 100 parts by weight of (component A), and the deflection temperature under load was measured (weight ratio: Bio-PC/PLLA/PDLA = 70/15/15). The results are shown in Table 1.

Comparative Example 2

A molded article with a thickness of 3 mm, a width of 12 mm and a length of 120 mm was produced by injection molding of 100 parts by weight of (component A) with a cylinder temperature of 230°C and a mold temperature of 50°C, and the deflection temperature under load was measured. The results are shown in Table 1.

Reference Example 1

A molded article was produced by the same procedure as in Example 1 except for combining 12.5 parts by weight each of (component B-1) and (component B-2) with respect to 100 parts by weight of an ordinary type of polycarbonate composed of bisphenol A (PC, PANLITE L-1250 by Teijin Chemicals, Ltd.) and setting the mold temperature during molding to 80°C, and the deflection temperature under load was measured (weight ratio: PC/PLLA/PDLA = 80/10/10). The results are shown in Table 1.

Reference Example 2

A molded article was produced by the same procedure as in Example 1 except for using an ordinary type of polycarbonate composed of bisphenol A (PC, PANLITE L-1250 by Teijin Chemicals, Ltd.), a cylinder temperature of 280°C and a mold temperature of 80°C, and the deflection temperature under load was measured. The results are shown in Table 1.

As seen in Table 1, the resin compositions of the invention composed of Bio-PC and polylactic acid had a drastically improved deflection temperature under load of at least 10°C higher than with Bio-PC alone, without reduction in the plant-derived component-containing weight ratio.

Table 1

| | | | Example 1 | Example 2 | Comparative Example 1 | Comparative Example 2 | Reference Example 1 | Reference Example 2 |
|---|---|---|---|---|---|---|---|---|
| Component A | Bio-PC [wt%] | | 90 | 80 | 70 | 100 | - | - |
| Component B | Polylactic acid | PLLA [wt%] | 5 | 10 | 15 | - | 10 | - |
| | | PDLA [wt%] | 5 | 10 | 15 | - | 10 | - |
| PC [wt%] | | | - | - | - | - | 80 | 100 |
| $R_{\geq 195°C}$ [%] | | | 100 | 82 | 88 | - | 76 | - |
| Deflection temperature under load [°C] | | | 101 | 96 | 83 | 85 | 114 | 130 |
| Plant-derived component-containing weight ratio (wt%) | | | 83.8 | 85.6 | 87.4 | 82 | 20 | 0 |

## Claims

1. A resin composition comprising 100 parts by weight of a polycarbonate (component A) containing an ether diol residue represented by the following formula (1) :

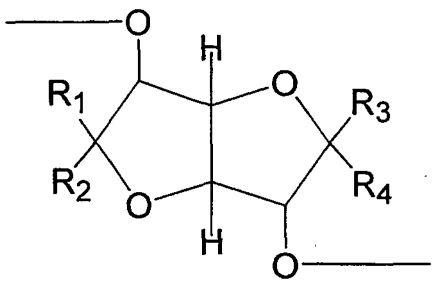

(1)

(wherein $R_1$-$R_4$ each independently represent hydrogen, alkyl, cycloalkyl or aryl), the ether diol residue represented by formula (1) constituting 40-100 mol% of the total diol residues in the polycarbonate, and 1-40 parts by weight of polylactic acid (component B), wherein the polylactic acid (component B) is composed of a poly-L-lactic acid component (component B-1) and a poly-D-lactic acid component (component B-2), and wherein in the melting peak derived from the polylactic acid component during temperature increase for measurement with a differential scanning calorimeter (DSC), the proportion of the melting peak area for 195°C and above is at least 60% of the sum of the melting peak area for 195°C and above (high temperature) and the melting peak area for 140-180°C (low temperature), as determined by measurement of the melting peak derived from the polylactic acid component during temperature increase with a differential scanning calorimeter (DSC).

2. A resin composition according to claim 1, wherein the weight ratio of the poly-L-lactic acid component (component B-1) and the poly-D-lactic acid component (component B-2) in component B (component B-1/component B-2) is 10/90-90/10.

3. A resin composition according to claim 1 or 2, wherein the deflection temperature under load of the resin composition as measured according to ISO75-1 and ISO75-2 with a test strip of 3 mm thickness, 12 mm width and 120 mm length is higher than 85°C under a load of 1.80 MPa.

4. A resin composition according to any one of claims 1 to 3, which further includes, as a diol residue in the polycarbonate (component A), a diol residue represented by the following formula (2):

$$-O-R_5-O- \quad (2)$$

(at least one diol residue wherein $R_5$ is a group selected from among C2-12 aliphatic hydrocarbon and alicyclic hydrocarbon groups).

5. A resin composition according to claim 4, wherein the diol residue of formula (2) is a 1,3-propanediol residue.

6. A resin composition according to any one of claims 1 to 5, which further comprises an isosorbide residue as the ether diol residue represented by formula (1).

## Patentansprüche

1. Harzzusammensetzung, umfassend 100 Gewichtsteile eines Polycarbonats (Komponente A) mit einem Etherdiolrest der folgenden Formel (1):

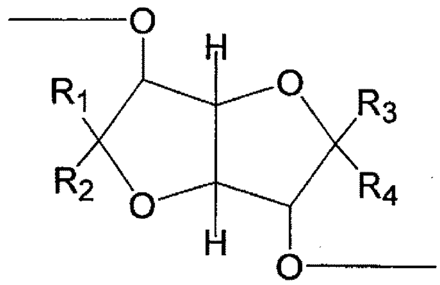

(1)

(worin $R_1$-$R_4$ jeweils unabhängig für Wasserstoff, Alkyl, Cycloalkyl oder Aryl stehen),
wobei der Etherdiolrest der Formel (1) 40-100 Mol% der gesamten Diolreste in dem Polycarbonat ausmacht, und 1-40 Gewichtsteile Polymilchsäure (Komponente B), wobei die Polymilchsäure (Komponente B) aus einer Poly-L-milchsäure-Komponente (Komponente B-1) und einer Poly-D-milchsäure-Komponente (Komponente B-2) besteht und wobei in dem von der Polymilchsäure-Komponente stammenden Schmelzpeak während der Temperaturerhöhung zur Messung mit einem Differentialkalorimeter (DSC) der Anteil der Schmelzpeakfläche für 195°C und darüber mindestens 60% der Summe der Schmelzpeakfläche für 195°C und darüber (hohe Temperatur) und der Schmelzpeakfläche für 140 bis 180°C (niedrige Temperatur) beträgt, wie durch Messung des von der Polymilchsäure-Komponente stammenden Schmelzpeaks während der Temperaturerhöhung mit einem Differentialkalorimeter (DSC) bestimmt.

**2.** Harzzusammensetzung nach Anspruch 1, wobei das Gewichtsverhältnis der Poly-L-milchsäure-Komponente (Komponente B-1) und der Poly-D-milchsäure-Komponente (Komponente B-2) in Komponente B (Komponente B-1/Komponente B-2) 10/90-90/10 beträgt.

**3.** Harzzusammensetzung nach Anspruch 1 oder 2, wobei die gemäß ISO 75-1 und ISO 75-2 mit einem Teststreifen mit einer Dicke von 3 mm, einer Breite von 12 mm und einer Menge von 120 mm unter einer Last von 1,80 MPa gemessene Wärmeformbeständigkeitstemperatur der Harzzusammensetzung unter Last über 85°C liegt.

**4.** Harzzusammensetzung nach einem der Ansprüche 1 bis 3, die ferner als Diolrest in dem Polycarbonat (Komponente A) einen Diolrest der folgenden Formel (2) enthält:

$$\textbf{-O-R}_5\textbf{-O} \qquad (2)$$

(mindestens einen Diolrest, worin $R_5$ für eine aus aliphatischen C2-12-Kohlenwasserstoff- und alicyclischen Kohlenwasserstoffgruppen ausgewählte Gruppe steht).

**5.** Harzzusammensetzung nach Anspruch 4, wobei sich bei dem Diolrest der Formel (2) um einen 1,3-Propandiolrest handelt.

**6.** Harzzusammensetzung nach einem der Ansprüche 1 bis 5, die ferner als Etherdiolrest der Formel (1) einen Isosorbidrest umfasst.

## Revendications

**1.** Composition de résine comprenant 100 parties en poids d'un polycarbonate (composant A) contenant un résidu d'éther-diol représenté par la formule (1) suivante :

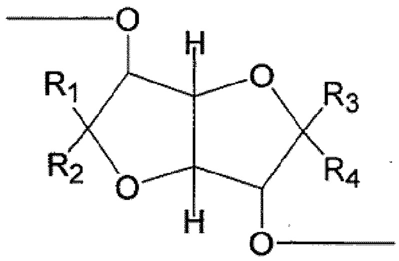 (1)

(dans laquelle $R_1$-$R_4$, chacun indépendamment, représentent un hydrogène, un alkyle, un cycloalkyle ou un aryle),
le résidu d'éther-diol représenté par la formule (1) constituant 40-100 % en moles du total des résidus de diol dans le polycarbonate, et 1-40 parties en poids d'acide polylactique (composant B), l'acide polylactique (composant B) étant constitué d'un composant acide poly-L-lactique (composant B-1) et d'un composant acide poly-D-lactique (composant B-2), et dans le pic de fusion dérivé du composant acide polylactique pendant l'augmentation de température pour une mesure avec un calorimètre différentiel à balayage (DSC), la proportion de la surface du pic de fusion pour 195 °C et plus représente au moins 60 % de la somme de la surface du pic de fusion pour 195 °C et plus (température haute) et de la surface du pic de fusion pour 140-180 °C (température basse), comme déterminé par mesure du pic de fusion dérivé du composant acide polylactique pendant l'augmentation de température avec un calorimètre différentiel à balayage (DSC).

**2.** Composition de résine selon la revendication 1, dans laquelle le rapport pondéral entre le composant acide poly-L-lactique (composant B-1) et le composant acide poly-D-lactique (composant B-2) dans le composant B (composant B-1/composant B-2) est de 10/90-90/10.

**3.** Composition de résine selon la revendication 1 ou 2, la température de fléchissement sous charge de la composition de résine telle que mesurée selon IS075-1 et IS075-2 avec une bande d'essai de 3 mm d'épaisseur, 12 mm de largeur et 120 mm de longueur étant supérieure à 85 °C sous une charge de 1,80 MPa.

**4.** Composition de résine selon l'une quelconque des revendications 1 à 3, qui comprend en outre, comme résidu de diol dans le polycarbonate (composant A), un résidu de diol représenté par la formule (2) suivante :

$$\mathbf{-O-R_5-O-} \qquad (2)$$

(au moins un résidu de diol dans lequel $R_5$ est un groupe choisi parmi les groupes hydrocarbonés aliphatiques et hydrocarbonés alicycliques en C2-12).

**5.** Composition de résine selon la revendication 4, dans laquelle le résidu de diol de formule (2) est un résidu de 1,3-propanediol.

**6.** Composition de résine selon l'une quelconque des revendications 1 à 5, qui comprend en outre un résidu d'isosorbide comme le résidu d'éther-diol représenté par la formule (1).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004111106 A
- JP 2005048067 A
- JP 7109413 A
- JP 11140292 A
- JP 2004250549 A
- EP 1264860 A1